# EUROPEAN PATENT APPLICATION

(11) **EP 4 213 474 A1**
(43) Date of publication of application: **19.07.2023**
(21) Application number: 21884712.7
(22) Date of filing: 02.09.2021
(51) Int. Cl.: H04M 1/72454, H04M 1/72406, H04M 1/72403, H04M 1/72469, H04M 1/72445, G06Q 30/02

(54) **ADVERTISEMENT DISPLAY METHOD AND ELECTRONIC DEVICE**

(30) Priority: 27.10.2020 CN 202011162105
(71) Applicant: Huawei Technologies Co., Ltd., Shenzhen, Guangdong 518129 (CN)
(72) Inventor: WANG, Zhihong, Shenzhen, Guangdong 518129 (CN)
(74) Representative: Pfenning, Meinig & Partner mbB
(86) International application number: PCT/CN2021/116292
(87) International publication number: WO 2022/088981

(57) **Abstract**

This application provides an advertisement display method and an electronic device, applied to the field of software design technologies, to avoid long-time screen-dominating display of a splash advertisement on an application, and increase total duration of advertisement display by displaying a thumbnail advertisement, thereby increasing a click-through rate of the advertisement and convenience of viewing the advertisement, and increasing an economic conversion rate of the advertisement. The method is applied to an electronic device configured with a display, and includes: displaying a splash advertisement based on first duration in response to an operation of opening a first application by a user; and displaying a home page of the first application after the display of the splash advertisement expires, and displaying a thumbnail advertisement at a preset location on the home page of the first application.

## Description

This application claims priority to Chinese Patent Application No. 202011162105.9, filed with the China National Intellectual Property Administration on October 27, 2020 and entitled "ADVERTISEMENT DISPLAY METHOD AND ELECTRONIC DEVICE", which is incorporated herein by reference in its entirety.

### TECHNICAL FIELD

This application relates to the field of application software design technologies, and in particular, to an advertisement display method and an electronic device.

### BACKGROUND

With the development of Internet applications, more applications (Application, APP) enrich users' life and work. To bring some revenues to software developers and avoid a white screen during page loading of an application, a splash advertisement may be displayed before an electronic device displays a front page of the application. The splash advertisement is a full-screen advertisement that is displayed on the App at launch for a limited display time. For example, when a user opens an APP, the APP usually displays a full-screen advertisement for about 3 seconds before displaying a front page of the application. The user may choose to manually tap to skip the splash advertisement to directly enter the front page, or manually tap to enter an advertisement page for more details.

However, currently, a splash advertisement on an APP is excessively long. For example, the splash advertisement is displayed for 3 seconds. The user feels that the advertisement dominates a screen for a long time, resulting in poor user experience; or the user needs to tap a skip button, resulting in complex operations. In another case, a splash advertisement is excessively short, that is, the splash advertisement flashes. For example, if the splash advertisement is displayed for only 1 second, the user may fail to see content of the splash advertisement, or the user sees the splash advertisement and is interested in content of the splash advertisement, but does not have enough time to tap the advertisement to view a detail page linked to the splash advertisement. In this case, the user may not be able to view the same advertisement again, or the user needs to search for another advertisement portal on the APP to view the detail page of the advertisement. As a result, operations are complex, and a click-through rate and an economic conversion rate of the advertisement are low.

### SUMMARY

This application provides an advertisement display method and apparatus, to avoid long-time display of a splash advertisement in an application, and increase total duration of advertisement display by displaying a thumbnail advertisement, thereby increasing a click-through rate of an advertisement and convenience of viewing the advertisement, and increasing an economic conversion rate of the advertisement.

To achieve the foregoing objective, this application uses the following technical solutions.

According to a first aspect, an advertisement display method is provided, applied to an electronic device configured with a display. The method includes: displaying a splash advertisement based on first duration in response to an operation of opening a first application by a user, where the first duration indicates display duration of the splash advertisement; displaying a home page of the first application after the display of the splash advertisement expires; and displaying a thumbnail advertisement at a preset location on the home page, where the thumbnail advertisement is a non-full-screen display advertisement corresponding to the splash advertisement.

In the foregoing technical solution, the splash advertisement and the thumbnail advertisement are combined for display, so that total duration of advertisement display is effectively increased, flexibility of advertisement display is improved, a click-through rate of the advertisement and convenience of viewing the advertisement can be effectively improved, and an economic conversion rate of the advertisement can be increased.

In a possible design manner, the display of the thumbnail advertisement is ended after displaying for second duration, or before the display of the thumbnail advertisement expires, an operation of opening the thumbnail advertisement is received, and an advertisement page corresponding to the thumbnail advertisement is displayed.

In the foregoing possible implementation, in this application, the display of the thumbnail advertisement is added, so that a presentation time of the advertisement is increased without affecting browsing and operation of a software application by the user. Therefore, when the user is interested in the advertisement, the user may tap the thumbnail advertisement to view a detail page of the advertisement, so that the user no longer needs to perform complex steps to view the advertisement or fails to find a link of the advertisement, thereby effectively improving convenience of viewing the advertisement and further increasing an economic conversion rate of the advertisement.

In a possible design manner, the first duration is preconfigured by the electronic device, or the first duration is obtained by the electronic device through information exchange with a server in response to the operation of opening the first application by the user

In the foregoing possible implementation, the electronic device may obtain the display duration of the splash advertisement by using the preconfigured first duration, or may obtain the display duration of the splash advertisement in real time through exchange with the server, thereby improving flexibility and variability of the display of the splash advertisement, and improving user experience.

In a possible design manner, a setting range of the first duration is 1 second to 2 seconds.

In the conventional technology, a display duration of a splash advertisement of application software is generally 3 seconds or longer. Some users may feel that an advertisement is displayed on a screen for a long time, resulting in poor user experience, or the user needs to tap a skip button, resulting in complex operations. In this application, the display of the splash advertisement is shortened, so that user experience can be improved. In addition, in combination with the display of the thumbnail advertisement, the overall display duration of the advertisement is extended, and the click-through rate and conversion rate of the advertisement are effectively increased.

In a possible design manner, the preset location is at least one of a corner location, a blank area, and an edge area corresponding to the home page of the first application.

In the foregoing possible implementation, the electronic device may display the thumbnail advertisement at the preset location, for example, at the corner location, the blank area, or the edge area of the home page of the application, or at any area that does not affect browsing of the home page by the user, or may display the thumbnail advertisement at a middle location at a bottom of the page, so that the user can conveniently tap the thumbnail advertisement to view details.

In a possible design manner, the second duration or the preset location is preconfigured, or the second duration or the preset location is obtained by the electronic device through information exchange with the server in response to the operation of opening the first application by the user.

In the foregoing possible implementation, the display duration or the preset location of displaying the thumbnail advertisement by the electronic device may be preconfigured, or may be obtained through exchange with the server in real time, so that flexibility of displaying the thumbnail advertisement is improved, and user experience is improved.

In a possible design manner, the second duration is greater than or equal to 3 seconds.

In the foregoing possible implementation, the display duration of the thumbnail advertisement may be greater than the display duration of the splash advertisement. For example, the second duration is set to 3 seconds to 5 seconds, so that a presentation time of the advertisement can be extended, making it convenient for the user to view the thumbnail advertisement and to be further interested in the thumbnail advertisement, thereby increasing the click-through rate of the advertisement and an economic conversion rate of the advertisement.

In a possible design manner, the thumbnail advertisement is displayed in a form of a floating window or a pop-up window.

In the foregoing possible implementation, the thumbnail advertisement is displayed in the form of the floating window or the pop-up window, so that the display of the thumbnail advertisement has little impact on an operation on the application by the user, and user experience is good.

In a possible design manner, the displaying a thumbnail advertisement at a preset location of the display specifically includes: displaying the thumbnail advertisement in an animation form at the preset location on the home page.

In the foregoing possible implementation, the electronic device may display a change from the splash advertisement to the thumbnail advertisement in an animation form, to attract attention of the user, improve the fun of the application, and further increase the click-through rate of the advertisement and the economic conversion rate of the advertisement.

In a possible design manner, the thumbnail advertisement is generated based on a preset advertisement thumbnail or key advertisement statement corresponding to the splash advertisement, or the thumbnail advertisement is randomly extracted from an advertisement data set corresponding to the splash advertisement.

In the foregoing possible implementation, the thumbnail advertisement displayed by the electronic device may be preset, or may be randomly generated, or may be obtained through exchange with the server in real time, to improve the flexibility and variability of the display of the thumbnail advertisement, improve the fun of the application, attract the attention of the user, and further increase the click-through rate of the advertisement and the economic conversion rate of the advertisement.

In a possible design manner, the thumbnail advertisement is generated by extracting a core element of the splash advertisement by using an artificial intelligence AI.

In the foregoing possible implementation, the thumbnail advertisement corresponding to the splash advertisement is generated by using the Al algorithm. For example, an advertisement core statement, an advertisement core image, an advertisement slogan, an advertisement brand, or an important animation effect in the advertisement that corresponds to the splash advertisement is extracted, and the generated advertisement thumbnail or an advertisement digest statement is generated, so that flexibility and variability of displaying the thumbnail advertisement can be improved, and the fun of an application can be improved. Alternatively, calculation is performed according to an Al algorithm that is based on the use habit or preference of the user, so that personalized configuration of the thumbnail advertisement can be implemented, and attention of the user is increased, thereby further increasing the click-through rate of the advertisement and the economic conversion rate of the advertisement.

According to a second aspect, an electronic device is provided, where the electronic device includes a memory and one or more processors; the memory is coupled to the processor; and the memory is configured to store computer program code, the computer program code includes computer instructions, and when the processor executes the computer instructions, the electronic device performs the following operations: displaying a splash advertisement based on first duration in response to an operation of opening a first application by a user, where the first duration indicates display duration of the splash advertisement; displaying a home page of the first application after the display of the splash advertisement expires; and displaying a thumbnail advertisement at a preset location on the home page, where the thumbnail advertisement is a non-full-screen display advertisement corresponding to the splash advertisement.

In a possible design manner, the electronic device further performs the following step: ending the display of the thumbnail advertisement after displaying for second duration, or before the display of the thumbnail advertisement expires, receiving an operation of opening the thumbnail advertisement, and displaying an advertisement page corresponding to the thumbnail advertisement.

In a possible design manner, the first duration is preconfigured by the electronic device, or the first duration is obtained by the electronic device through information exchange with a server in response to the operation of opening the first application by the user

In a possible design manner, a setting range of the first duration is 1 second to 2 seconds.

In a possible design manner, the preset location is at least one of a corner location, a blank area, and an edge area corresponding to the home page of the first application.

In a possible design manner, the second duration or the preset location is preconfigured by the electronic device, or the second duration or the preset location is obtained by the electronic device through information exchange with the server in response to the operation of opening the first application by the user

In a possible design manner, the second duration is greater than or equal to 3 seconds.

In a possible design manner, the thumbnail advertisement is displayed in a form of a floating window or a pop-up window.

In a possible design manner, when displaying the thumbnail advertisement at the preset location on the home page, the electronic device performs the following step: displaying the thumbnail advertisement in an animation form at the preset location on the home page.

In a possible design manner, the thumbnail advertisement is generated based on a preset advertisement thumbnail or key advertisement statement corresponding to the splash advertisement.

In a possible design manner, the thumbnail advertisement is generated by extracting a core element of the splash advertisement by using an artificial intelligence Al model.

According to a third aspect, a chip system is provided, where the chip system is applied to an electronic device; the chip system includes one or more interface circuits and one or more processors; the interface circuit is interconnected with the processor by using a line; the interface circuit is configured to receive a signal from a memory of the electronic device, and send the signal to the processor, where the signal includes computer instructions stored in the memory; and when the processor executes the computer instructions, the electronic device performs the advertisement display method in the foregoing first aspect.

According to a fourth aspect, a computer-readable storage medium is provided, where the readable storage medium stores instructions, and when the readable storage medium runs on an electronic device, the electronic device is enabled to perform the advertisement display method in the foregoing first aspect.

According to a fifth aspect, a computer program product is provided, where when the computer program product runs on a computer, the computer is enabled to perform the advertisement display method in the foregoing first aspect.

It may be understood that any electronic device, computer-readable storage medium, or computer program product provided above may be implemented by using the corresponding method provided above. Therefore, for beneficial effects that can be achieved by the electronic device, the computer-readable storage medium, or the computer program product, refer to beneficial effects in the corresponding method provided above. Details are not described herein again.

### BRIEF DESCRIPTION OF DRAWINGS

FIG. 1 is a schematic diagram of an architecture of a communication system according to an embodiment of this application;
FIG. 2 is a schematic diagram of a hardware structure of an electronic device according to an embodiment of this application;
FIG. 3 is a schematic diagram of a software structure of an electronic device according to an embodiment of this application;
FIG. 4 is a schematic flowchart of an advertisement display method according to an embodiment of this application;
FIG. 5A and FIG. 5B are a schematic flowchart and a screen demonstration effect of an advertisement display method according to an embodiment of this application;
FIG. 6A and FIG. 6B are a schematic diagram of a display effect of a thumbnail advertisement according to an embodiment of this application;
FIG. 7 is a schematic diagram of another display effect of a thumbnail advertisement according to an embodiment of this application;
FIG. 8 is a schematic diagram of a display effect of viewing a thumbnail advertisement according to an embodiment of this application; and
FIG. 9 is a schematic flowchart of another advertisement display method according to an embodiment of this application.

### DESCRIPTION OF EMBODIMENTS

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more

It should be noted that, in this application, the term "for example" or "such as" is used to represent giving an example, an illustration, or a description. Any embodiment or design scheme described as "for example" or "such as" in this application should not be explained as being more preferred or having more advantages than another embodiment or design scheme. Exactly, use of the term, for example, "for example" or " such as", is intended to present a related concept in a specific manner.

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

First, an implementation environment and an application scenario of the embodiments of this application are briefly described.

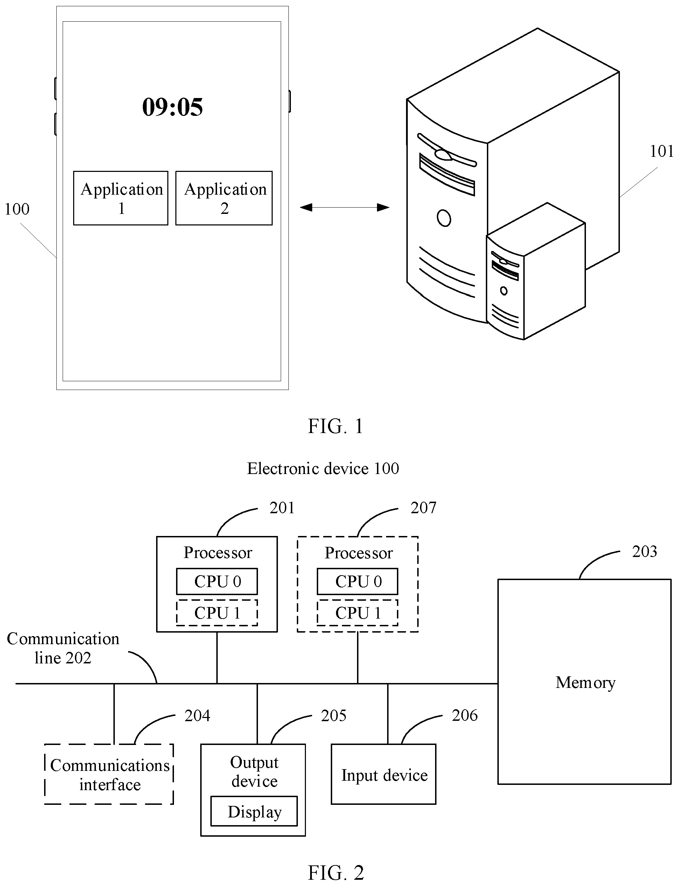

FIG. 1 is a simplified schematic diagram of an architecture of a communication system according to an embodiment of this application. The architecture of the system may include at least an electronic device 100 and a management server 101.

At least one application 1 configured with a splash advertisement display function may be installed on the electronic device 100. In addition, an application 2 that does not have a splash advertisement display function may be further installed on the electronic device. The application 1 may be a music-type software application, or may be a software application, for example, a video, news, social, or shopping software application that has a splash advertisement display function. The application 2 may be a software application, for example, a setting, calculator, compass, recorder, camera, call, or messaging software application, that does not have a splash advertisement display function. When the electronic device 100 receives an operation of opening the application 1 by a user, the electronic device 100 may process display of a splash advertisement and data loading of a home page of the application 1, to present the splash advertisement and the home page of the application 1 to the user. It may be understood that, although the application 1 and the application 2 are shown in the accompanying figures, the quantity, the type, or the like of applications is not limited.

The management server 101 is configured to store configuration information of the splash advertisement, and may be further configured to store configuration information of an application, and the like. The electronic device 100 may obtain, through information exchange with the management server 101, a data package for loading the application, the configuration information of the splash advertisement, and the like.

It should be noted that the foregoing functions are configured on one server, or may be implemented by using two servers. For example, the configuration information of the splash advertisement is implemented on a server, for example, referred to as a splash configuration server, and the configuration information of the application is implemented on another server. This is not specifically limited in embodiments of this application.

In some embodiments, after receiving an operation of opening the application having the splash advertisement display function by the user, the electronic device 100 may present the splash advertisement to the user based on the locally cached configuration information of the splash advertisement of the application. The configuration information of the splash advertisement of the application may be locally cached when the application is started for the first time, or may be locally cached when another application that is in the electronic device 100 and that has a splash advertisement display function is started for the first time. Alternatively, the electronic device 100 may obtain the configuration information of the splash advertisement of the application through exchange with the management server 101. In addition, when the application or another application having a splash advertisement display function is subsequently started, the locally cached configuration information of the splash advertisement of the application may be further dynamically updated.

In some other embodiments, the electronic device 100 may select an appropriate splash advertisement from locally cached splash advertisements, and present the splash advertisement to the user by using an operating system of the electronic device 100.

In some other embodiments, after receiving the operation of opening the application by the user, the electronic device 100 may first determine whether the application has a splash advertisement display function. If the application has a splash advertisement display function, the splash advertisement may be displayed, to present splash information to the user. If the application does not have a splash advertisement display function, a front page of the application may be directly loaded for display. The electronic device 100 may automatically display a page, for example, a front page of the application based on the locally cached configuration information of the application.

For example, after receiving the operation of opening the application by the user, the electronic device 100 may further asynchronously obtain the configuration information of the splash advertisement of the application from the management server 101. The electronic device 100 may update locally cached information based on the obtained configuration information of the splash advertisement and the splash advertisement, to facilitate subsequent use. For example, after receiving the operation of opening the application by the user again, the electronic device 100 may display the splash advertisement based on the locally cached configuration information of the splash advertisement of the application.

The electronic device 100 in embodiments of this application may be specifically an electronic device with a display and a display function, for example, a mobile phone, a tablet computer, a desktop, a laptop, a handheld computer, a notebook computer, a personal computer (personal computer, PC), a netbook, a cellular phone, a personal digital assistant (personal digital assistant, PDA), a wearable device (for example, a smartwatch), a smart home device (for example, an Internet protocol television (Internet protocol television, IPTV) and a smart television), an in-vehicle computer, a game console, and a device including an application having a splash advertisement display function, for example, an augmented reality (augmented reality, AR)\virtual reality (virtual reality, VR) device. A specific form of the electronic device 100 is not particularly limited in this embodiment.

The following uses an example in which the electronic device 100 is a mobile phone to describe a specific structure of the electronic device 100 in detail.

FIG. 2 is a schematic diagram of a structure of an electronic device according to an embodiment of this application. An electronic device 100 may include at least one processor 201, a communication line 202, a memory 203, and the like.

It may be understood that the structure shown in this embodiment does not constitute a specific limitation on the electronic device. In some other embodiments, the electronic device may include more or fewer components than those shown in the figure, or some components may be combined, or some components may be split, or different component arrangements may be used. The components shown in the figure may be implemented by hardware, software, or a combination of software and hardware.

The processor 201 may include one or more processing units. For example, the processor 201 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the electronic device. The controller may generate an operation control signal based on an instruction operation code and a time sequence signal, to complete control of instruction reading and instruction execution.

A memory may be further disposed in the processor 201, and is configured to store instructions and data. In some embodiments, the memory in the processor 201 is a cache. The memory may store instructions or data just used or cyclically used by the processor 201. If the processor 201 needs to use the instructions or the data again, the processor may directly invoke the instructions or the data from the memory. This avoids repeated access and reduces a waiting time of the processor 201, to improve system efficiency.

In some embodiments, the processor 201 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The communication line 202 may include a path, for example, a bus, for transmitting information between the foregoing components.

The memory 203 may be a read-only memory (read-only memory, ROM) or another type of static storage device capable of storing static information and instructions, or a random access memory (random access memory, RAM) or another type of dynamic storage device capable of storing information and instructions. Alternatively, the memory 203 may be an electrically erasable programmable read-only memory (electrically erasable programmable read-only memory, EEPROM), a compact disc read-only memory (compact disc read-only memory, CD-ROM) or another optical disk storage, an optical disc storage (including a compact optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory 203 may exist independently, and be connected to the processor 201 by the communication line 202. The memory 203 may alternatively be integrated with the processor 201. The memory provided in embodiments of the present disclosure may usually be non-volatile. The memory 203 is configured to store computer-executable instructions for executing the solutions of the present disclosure, and execution of the computer-executable instructions is controlled by the processor 201. The processor 201 is configured to execute the computer-executable instructions stored in the memory 203, to implement the method provided in embodiments of the present disclosure.

Optionally, the computer-executable instructions in embodiments of the present disclosure may also be referred to as code of an application. This is not specifically limited in embodiments of the present disclosure.

During specific implementation, in an embodiment, the processor 201 may include one or more CPUs, for example, a CPU 0 and a CPU 1 in FIG. 2.

In specific implementation, in an embodiment, the electronic device 100 may include a plurality of processors, for example, the processor 201 and a processor 207 in FIG. 2. Each of the processors may be a single-core (single-CPU) processor, or may be a multi-core (multi-CPU) processor. The processor herein may be one or more devices, circuits, and/or processing cores configured to process data (for example, computer program instructions).

In specific implementation, in an embodiment, the electronic device 100 may further include a communications interface 204. The communications interface 204 is configured to communicate with another device or a communication network by using any apparatus such as a transceiver, and is, for example, an Ethernet interface, a radio access network (radio access network, RAN) interface, or a wireless local area network (wireless local area networks, WLAN) interface. In embodiments of this application, the electronic device 100 may perform data communication with a server device through the communications interface 204, for example, obtain configuration information of a splash advertisement, and obtain loading data of the application.

In specific implementation, in an embodiment, the electronic device 100 may further include an output device 205 and an input device 206. The output device 205 communicates with the processor 201, and may display information in a plurality of manners. For example, the output device 605 may be a display, and may be specifically a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, a microphone, a sensing device, or the like.

In embodiments of this application, the electronic device 100 may receive an operation of the user by using the input device 206 and perform a corresponding response operation. For example, the electronic device 100 may receive, by using the touchscreen device, an icon that is of the application and that is tapped or touched by the user or that is displayed on a home screen, and perform a response operation of opening the application. The electronic device 100 may further receive a voice instruction of the user by using the microphone, and open a corresponding application.

For example, the electronic device 100 may implement a display function by using the GPU, the display, the application processor, and the like. The GPU is a microprocessor for image processing, and connects the display to the application processor. The GPU is configured to perform mathematical and geometric computation, and render an image. The processor 201 may include one or more GPUs that execute program instructions to generate or change display information.

The display is configured to display an image, a video, or the like. The display includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a Miniled, a MicroLed, a Micro-oLed, a quantum dot light-emitting diode (quantum dot light emitting diodes, OLED), or the like. In some embodiments, the electronic device may include one or N displays, where N is a positive integer greater than 1. For example, in embodiments of this application, the display may be configured to display an application screen, a splash advertisement, a thumbnail advertisement, and the like.

All technical solutions in the following embodiments may be implemented in the electronic device that has the foregoing hardware architecture.

In addition, a software system of the electronic device may use a layered architecture, an event-driven architecture, a micro kernel architecture, a micro-service architecture, or a cloud architecture. For example, an operating system of a smartphone may be Android, iOS, Symbian, or another mobile phone operating system. In embodiments of this application, only an Android system of a layered architecture is used as an example to describe a software structure of the electronic device. The following schematic software architecture does not constitute a specific limitation on the electronic device.

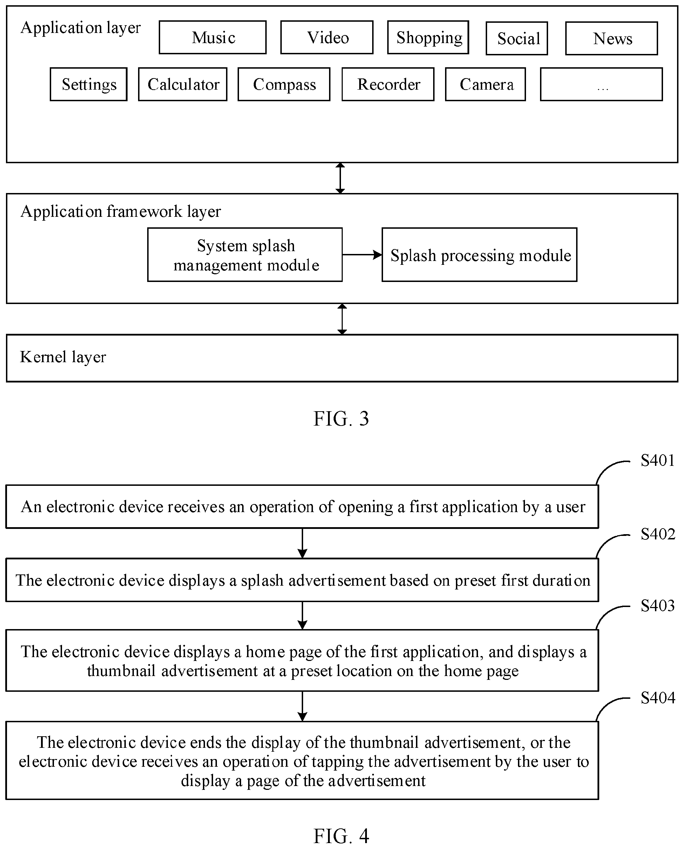

FIG. 3 is a diagram of a software structure of an electronic device according to an embodiment of this application. In a layered architecture, software is divided into several layers, and each layer has a clear role and task. The layers communicate with each other through a software interface. In some embodiments, an Android system is divided into three layers that are an application layer, an application framework layer (framework), and a kernel layer from top to bottom.

The application layer may include a series of application packages. As shown in FIG. 3, the application packages may include applications having a splash advertisement display function, for example, some applications such as an online shopping platform, a news application, an audio and video playback application, and a social or chat application. The application packages may further include an application that does not have a splash advertisement display function, for example, an application, for example, a setting, calculator, compass, recorder, camera, call, or messaging application.

The framework of the electronic device may include a system splash management module, to implement processing logic of a splash function completed by using an operating system, for example, present a splash advertisement to a user.

The foregoing system splash management module may also be referred to as a system splash manager, and may be a software development kit (software development kit, SDK). The system splash management module may be included at the application framework layer (framework). In addition, when the processing logic of the splash function is completed by using the operating system, the framework may initialize the application in parallel and directly jump to a corresponding page. For example, the system splash management module may indicate a splash processing module in the framework of the electronic device in parallel to initialize the application and directly jump to a corresponding page.

The application framework (framework) layer provides an application programming interface (application programming interface, API) and a programming framework for an application at the application layer. The framework is a base of an operating framework of the electronic device. In this embodiment, the framework may further include the splash processing module. The splash processing module may be responsible for initializing an application at the application layer when the application is started, and may further directly jump to a corresponding page (for example, a front page of the application) based on invocation by the system splash management module. In addition, the framework may be further responsible for providing a mechanism of communication between applications.

The kernel layer is a layer between hardware and software. The kernel layer includes at least a display driver, a camera driver, an audio driver, and a sensor driver.

The following describes in detail an advertisement display method based on an application according to an embodiment of this application with reference to the hardware structure shown in FIG. 2 and the software structure shown in FIG. 3.

Embodiments of this application provide an advertisement display method on an application. A shorttime splash advertisement is displayed. After a front page of the application is entered, a thumbnail advertisement is simultaneously displayed for a period of time at a preset location on the front page of the application, that is, the splash advertisement is combined with the thumbnail advertisement, so that long-time display of the splash advertisement in the application can be avoided, and total duration of overall advertisement display is extended by displaying the thumbnail advertisement, thereby effectively increasing a click-through rate of the advertisement and convenience of viewing the advertisement, and increasing an economic conversion rate of the advertisement.

FIG. 4 is a schematic flowchart of an advertisement display method on an application according to an embodiment of this application. In the embodiment shown in FIG. 4, an example in which the electronic device is a mobile phone and the application having a splash advertisement display function is a first application is used for description. As shown in FIG. 4, the method may include the following steps.

S401: The electronic device receives an operation of opening the first application by a user.

The operation of opening the first application by the user is generally an operation of touching or tapping, by the user, an icon of the application corresponding to the first application displayed on a screen or a menu page of the electronic device. It may be understood that the operation of opening the first application by the user may be implemented by voice control, or may be implemented by using operations such as an air gesture. The operation of opening the first application by the user may be implemented from another application. For example, in a process of operating a second application, the user opens the first application by tapping or touching a link. This is not specifically limited in this application.

In addition, the operation of opening the first application by the user may be an operation of opening the application by the user for the first time, or may be an operation of opening the application by the user for an N^{th} time, where N is greater than 1. Alternatively, the operation of opening the first application by the user may be an operation of opening again, after the user exits the application, a page that is cached by the application during exit. For example, the user browses the first application at a moment T1, the user taps an icon of the second application displayed on a home screen of the electronic device or directly opens the second application by using another shortcut operation at a moment T2, and then taps an icon of the first application displayed on the home screen of the electronic device or opens the first application by using another shortcut operation at a moment T3. In this case, the electronic device may directly display the page that is cached by the electronic device and that is obtained when the user browses the first application at the moment T1.

In another case, the operation of opening the first application by the user may be an operation of automatically returning, by the electronic device by default, to display a page of the first application. For example, in a process of browsing the first application, the user answers a call or makes an audio call or a video call (which is an audio call or a video call in a social or chat application). After the call ends, the user taps or touches an icon of "hanging up a call", and the electronic device may automatically jump back, by default, to a page that is cached by the first application and that is interrupted or exited by the call or video call. In an actual implementation process, another operation of automatically jumping back to the application by the electronic device after the display is interrupted by another application may be further included. This is not specifically limited in this application.

It should be noted that, to avoid a user's aversion caused by repeated display of a splash advertisement or reduce a user's positive feedback, when configuring a splash advertisement for an application, a person skilled in the art may selectively configure the splash advertisement based on the foregoing different cases of "the operation of opening the first application by the user", or periodically configure the splash advertisement for the user in different operation cases based on a use time of the user. This is not specifically limited in this application.

S402: The electronic device displays the splash advertisement based on preset first duration.

The splash advertisement is a full-screen display advertisement, and is displayed by a picture, an animation, or music. Splash advertisements displayed when the user opens a same application on the electronic device may have a same advertising theme or may have different advertising themes. For example, the theme of the splash advertisement may be advertisement content of a software application product, advertisement content of an online shopping platform, promotion content of a latest movie, or the like. A form, theme content, or the like of the splash advertisement is not specifically limited in this application.

The configuration information of the splash advertisement may be a configuration delivered by a server, or may be preconfigured in the first application, or may be a configuration obtained by a background of the first application from the server in real time. This is not specifically limited in this application.

Display duration of the splash advertisement is the first duration. The first duration may be in seconds or milliseconds. For example, the first duration may be specifically 1 second to 1.5 seconds. For example, the splash advertisement may be displayed for only 1 second.

The display duration of the splash advertisement, namely, the preset first duration, may be uniformly configured by the electronic device in advance, that is, the electronic device uniformly sets the first duration. Duration of displaying the splash advertisement by all applications that can display the splash advertisement is the first duration, and is used to limit and restrict splash duration of all applications. For example, when an application is started, the first duration may be obtained from the electronic device by default.

Alternatively, the first duration may be configured on a server side, and the electronic device may determine the display duration of the splash advertisement through data exchange with the server. For example, the server may provide an operation of configuring the first duration. An administrator sets the first duration as the display duration of the splash advertisement and stores the first duration. When an application on the electronic device is started, the application may request the configured duration of the splash advertisement from the server side, and store the configured duration of the splash advertisement locally on the electronic device for use when the application is started subsequently. Alternatively, when the electronic device starts the application for the first time, the electronic device may use the display duration of the splash advertisement that is configured by the electronic device or that is configured in an application package by default, then obtain the display duration of the splash advertisement through exchange with the server, and store the display duration locally in the electronic device for use when the application is started subsequently.

In addition, when the electronic device displays the splash advertisement, a display may display or may not display a "skip" icon, or may display or may not display a field for indicating a countdown of the splash advertisement. The "skip" icon indicates the user to tap the "skip" icon for direct displaying of a home screen of the first application without displaying the splash advertisement. The field of countdown indicates remaining display duration of the splash advertisement. For example, the field of countdown is displayed as " 1 second", and then is changed to "0 seconds".

When the electronic device displays the splash advertisement based on the preset first duration, the background of the electronic device may perform data loading or screen rendering on the home screen of the first application. Specifically, the electronic device may obtain a data package for loading the home screen of the first application through data exchange with the server. Alternatively, the electronic device may quickly implement data loading or screen rendering of the home screen based on a pre-stored and pre-loaded resource. The pre-loaded resource of the application may be cached on the electronic device when the application is opened for the first time, or may be included when the electronic device downloads the application. This is not specifically limited in this application.

Duration of a splash advertisement of an existing software application is usually greater than 3 seconds, and user experience is poor due to a long waiting time. In this application, the duration of the splash advertisement is shortened, so that user experience can be effectively improved.

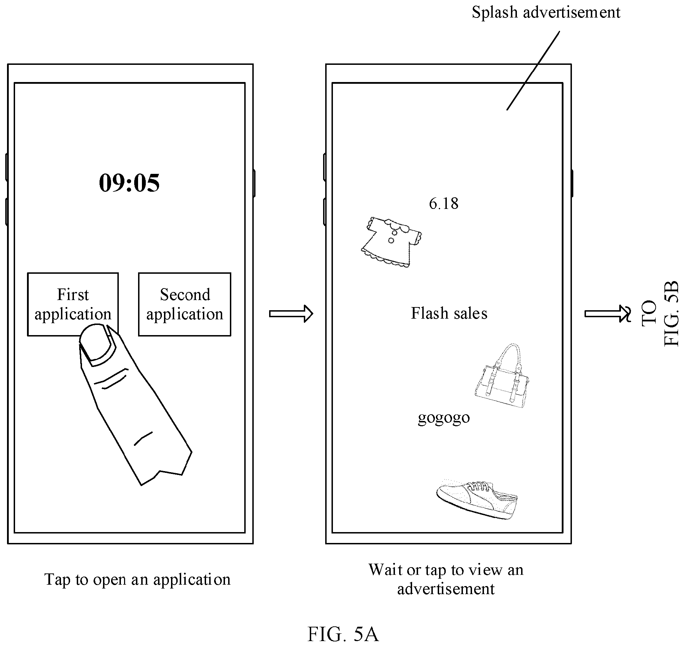

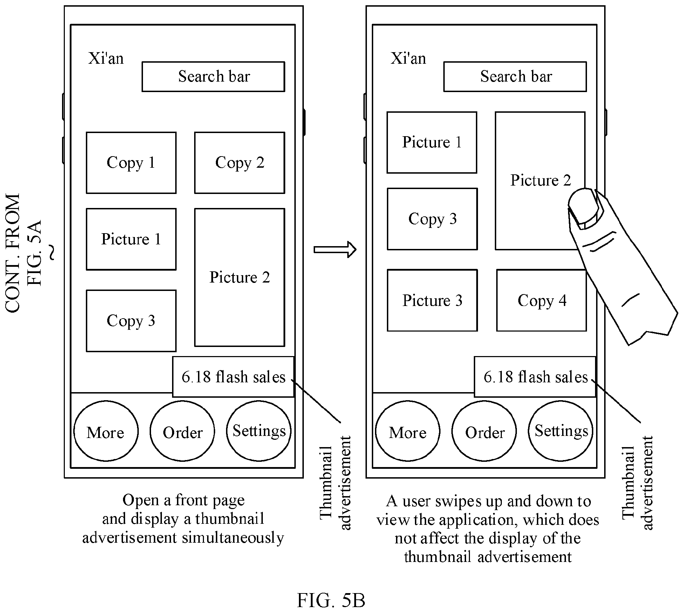

For example, an entire procedure of opening the application and a screen demonstration effect may be shown in FIG. 5A and FIG. 5B. In a time period in which the electronic device displays the splash advertisement, the user may not perform any operation, but only wait until the display of the splash advertisement expires and the home page of the first application is loaded. Alternatively, the user is interested in content of the splash advertisement, or may tap any location on a page of the splash advertisement, and the electronic device performs, based on a web page to which the splash advertisement links, and jumps to a detail page of the advertisement corresponding to the splash advertisement.

S403: The electronic device displays the home page of the first application, and displays a thumbnail advertisement at a preset location on the home page.

The home page may also be referred to as a front page, and is a page opened by default after the application is started.

The thumbnail advertisement is an advertisement with a small display size. Compared with the splash advertisement, the thumbnail advertisement is not displayed in full screen, and occupies only a small part of the display for display. The thumbnail advertisement may be displayed at a fixed or a random preset location. For example, the preset location may be displayed in a blank location of the display based on aesthetics, or may be set according to a behavioral habit of each user based on ergonomics. For example, the user is accustomed to performing a one-hand operation, and the preset location may be set at a location that the user is accustomed to when the user performs a one-hand operation and that is easy to touch by the finger.

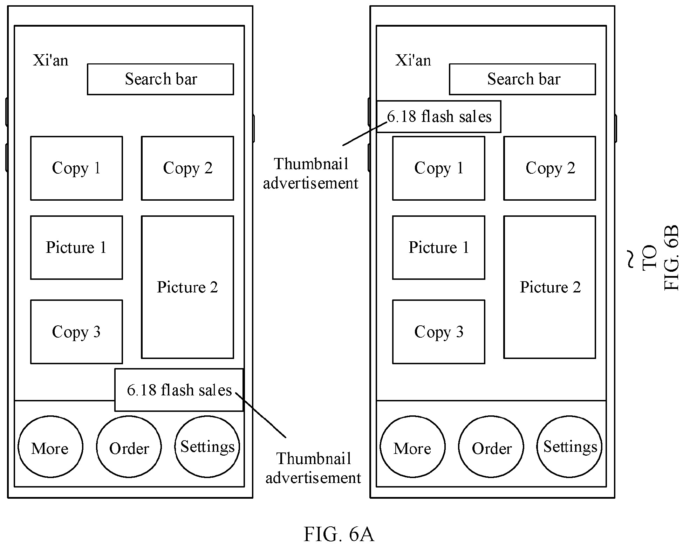

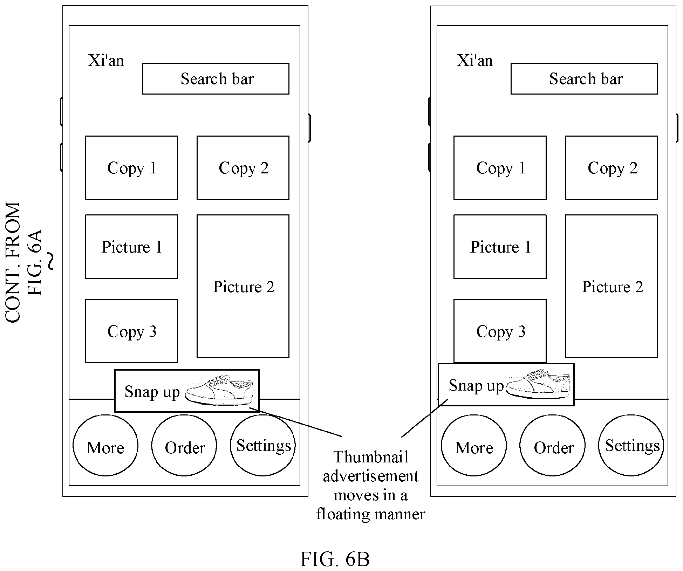

For example, as shown in FIG. 5B, the thumbnail advertisement may be displayed at a corner location of the home page of the application, for example, a lower right corner area of the home page of the application. Alternatively, as shown in FIG. 6A and FIG. 6B, the thumbnail advertisement may be displayed in any area that does not affect the browsing of the user of the home page, for example, a blank area or an edge area on the page, or may be displayed in a middle location at a bottom of the page, so that the user can conveniently tap the thumbnail advertisement to view details.

The thumbnail advertisement may be displayed in a form of a floating window or a pop-up window. The floating window may be a display window floating on a current page, and the pop-up window may be a form of popping up a small display window based on display of the current page. The thumbnail advertisement may be a floating icon, or the thumbnail advertisement may be a pop-up window or a floating moving window.

In embodiments of this application, neither the floating window nor the pop-up window affects the display of the current home page of the application and an operation performed by the user on the home page, but blocks only a part of a display area of the application. Therefore, the display of the thumbnail advertisement does not affect browsing of page content of the application and corresponding operation by the user. For example, as shown in FIG. 5B, the user swipes up and down to view an application page, which does not affect the display of the thumbnail advertisement, or may tap another page tab to jump to view another page of the application.

In addition, content of the thumbnail advertisement may be an advertisement picture, a text, or an animation of a reduced version corresponding to the foregoing splash advertisement, as shown in FIG. 6A and FIG. 6B. Alternatively, the content of the thumbnail advertisement may be an advertisement picture, a text, or an animation of another theme related to the foregoing splash advertisement. For example, the thumbnail advertisement may be advertisement content of a different theme of a same product of the splash advertisement. For example, for an advertisement for a mobile phone, the splash advertisement is an advertisement whose theme is based on product performance, and the corresponding thumbnail advertisement may be advertisement content whose theme is based on a product appearance or a product endorser. Alternatively, the thumbnail advertisement may be one of product series advertisements. For example, an advertisement of a product includes an advertisement 1, an advertisement 2, and an advertisement 3. The splash advertisement is content of the advertisement 1. In this case, the thumbnail advertisement may be a segment or a part of content of the advertisement 2 or the advertisement 3 in the series of advertisements.

The thumbnail advertisement may be a static picture, or may be a multi-frame animation, or may be an animation in a PowerPoint (PowerPoint, PPT) format, or may be a Flash animation, or the like. A representation form of the thumbnail advertisement is not specifically limited in this application.

The thumbnail advertisement may be simultaneously displayed with the home page of the first application for a long time, or display duration of the thumbnail advertisement may be second duration. To be specific, after the electronic device displays thumbnail advertisement of the second duration, the display of the thumbnail advertisement is automatically ended or closed. The second duration may be in seconds or milliseconds. For example, the second duration may be specifically 3 seconds to 5 seconds, more than 3 seconds, or more than 5 seconds. For example, the thumbnail advertisement may be displayed for 5 seconds.

In an implementation, generation and display manners of the thumbnail advertisement may be as follows: After step S402, the splash advertisement displayed by the electronic device changes dynamically to the thumbnail advertisement, and is displayed simultaneously with the home page of the application. A dynamic change form of the splash advertisement to the thumbnail advertisement is not limited in this application. For example, the dynamic change form may be different implementation forms such as flying in, flying out, popping, folding, flipping, or zooming. In this way, users can be attracted and attention can be drawn, and the click-through rate and economic conversion rate of advertisements can be increased.

In an implementation, the configuration information of the thumbnail advertisement may be a configuration delivered by a server, or may be preconfigured in the first application, or may be a configuration obtained by a background of the first application from the server in real time. This is not specifically limited in this application.

In addition, the content of the thumbnail advertisement may be an advertisement thumbnail or a key advertisement statement specified by an advertisement manufacturer, or the content of the thumbnail advertisement may be generated in real time according to a specific algorithm, or may be randomly extracted from a data set of the thumbnail advertisement.

In a possible implementation, the electronic device may generate the thumbnail advertisement by performing calculation based on information about the splash advertisement in step S402 by using an artificial intelligence (Artificial Intelligence, AI) model, and extracting a core element of the splash advertisement. The core element may be an advertisement core statement, an advertisement core image, an advertisement slogan, an advertisement brand, an important animation effect in an advertisement, or the like.

For example, the electronic device may extract, by using an AI model, specific information in the splash advertisement, for example, an advertisement core statement, an advertisement slogan, an advertisement brand, or a core animation effect in the advertisement, to condense core information of the advertisement into the advertisement thumbnail or an advertisement digest statement, and display the advertisement thumbnail or the advertisement digest statement in a specified area of the home page of the application.

In addition, the electronic device may interact with the server, to obtain the advertisement thumbnail or the advertisement digest statement that is generated by the server based on the AI model, and display the advertisement thumbnail or the advertisement digest statement. The AI model may be specifically an advertisement extraction algorithm, and may be an algorithm or a model obtained by performing parameter training on a large amount of precollected advertisement information and a specified thumbnail advertisement corresponding to the advertisement. In this way, the electronic device or the server may obtain, based on any piece of advertisement information by using the Al model, a thumbnail advertisement corresponding to the advertisement.

In a possible implementation, the AI model may perform algorithm update and model iteration based on a current usage habit and preference of the user, so that the thumbnail advertisement obtained by the electronic device based on the AI model may be generated based on the usage habit and preference of the user.

For example, the AI model may collect a display location with the highest click-through rate of the user, or collect a picture style, for example, a comic style, a funny style, a beautiful style, or a minimalistic style, with the highest click-through rate of the user. When generating a thumbnail advertisement, the electronic device may calculate parameters such as a display location and a display style of the thumbnail advertisement based on the AI model, that is, based on the foregoing usage habit and preference of the user, and display the thumbnail advertisement based on the foregoing parameters, and exclusive thumbnail advertisements are generated to better fit users' preferences, thereby attracting users' attention, increasing the click-through rate and conversion rate of advertisements, and improving user experience.

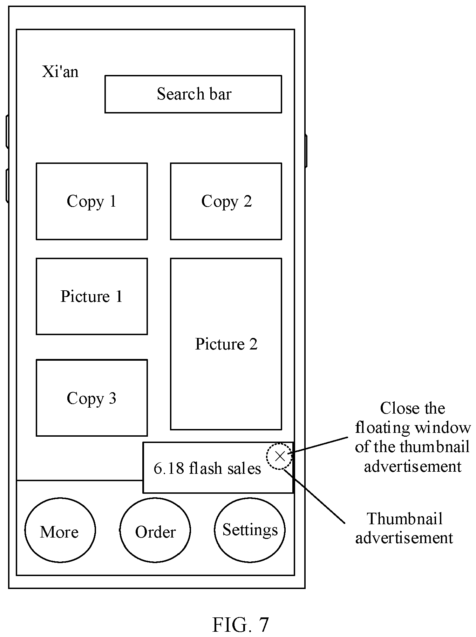

In addition, in an implementation, when displaying the splash advertisement, the electronic device may display or may not display a "×" icon for closing the thumbnail advertisement, or may display or may not display a field for indicating a countdown of the splash advertisement. As shown in FIG. 7, the "×" icon indicates the user to close the floating window of the thumbnail advertisement by tapping the "×" icon, and directly display the page of the first application. The field of countdown indicates remaining display duration of the thumbnail advertisement. For example, the field of countdown displays "5 seconds", "4 seconds", or the like. After the field of countdown is changed to " 1 second", the floating window of the thumbnail advertisement is closed upon expiration and is no longer displayed.

S404: The electronic device ends the display of the thumbnail advertisement, or the electronic device receives an operation of tapping the advertisement by the user to display a page of the advertisement.

After the second duration of displaying the thumbnail advertisement expires, the electronic device may end the display of the thumbnail advertisement, and directly display the first page of the first application, or continue to display a current screen on which the user performs an operation.

It should be noted that the splash advertisement or the thumbnail advertisement displayed in step S402 and step S403 both point to a specific uniform resource identifier (Uniform Resource Identifier, URI) link. In other words, when the user taps any one of the splash advertisement or the thumbnail advertisement, the electronic device may jump to a web page linked to a URI corresponding to the splash advertisement or the thumbnail advertisement.

The URI is a character string used to identify a name of an Internet resource. This identity allows the user to perform an interaction operation with any resource (including local and Internet resources) through specific protocols. The URI is defined by a scheme that includes the determining of syntax and related protocols. Each type of resource, for example, an HTML document, an image, a video clip, or a program available, on the network may be located by using a URI, so that the electronic device may obtain a corresponding resource by using the URI.

In an implementation, before the second duration of displaying the thumbnail advertisement expires, if the user is interested in the content of the thumbnail advertisement, the user may further view the advertisement by taping or touching an icon of the thumbnail advertisement. In this case, the electronic device receives an operation of taping the thumbnail advertisement by the user, that is, may display a page of the advertisement based on the URI corresponding to the thumbnail advertisement.

In a possible implementation, after receiving an operation of tapping the thumbnail advertisement by the user, the electronic device automatically jumps to display a page corresponding to the advertisement, that is, jumps from the page of the first application to display a web page corresponding to the thumbnail advertisement.

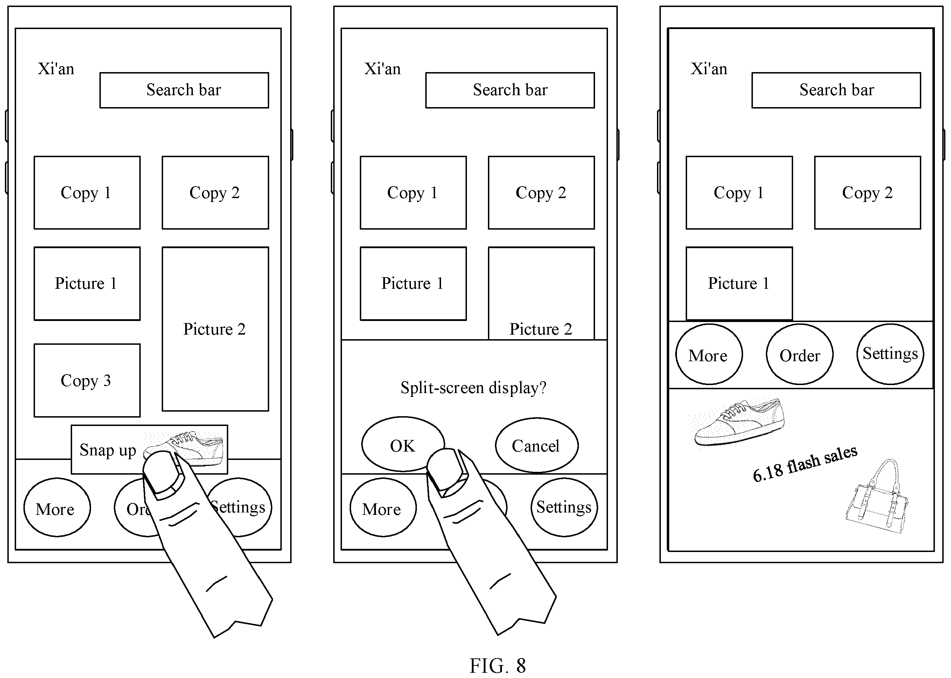

In another possible implementation, after receiving an operation of tapping the thumbnail advertisement by the user, the electronic device may simultaneously open, in a manner of requesting the user to perform split-screen display or directly performing split-screen display, the web page corresponding to the thumbnail advertisement, and simultaneously display, in a manner of split-screen display, the page of the first application and the web page corresponding to the thumbnail advertisement. As shown in FIG. 8, the user may be asked, by using a pop-up window, "whether to perform split-screen display". When the user taps "OK", the electronic device may simultaneously display, by using a split-screen display technology, the page of the first application and the web page corresponding to the thumbnail advertisement.

In the foregoing implementation of this application, the following effect can be achieved. The electronic device shortens the display duration of the splash advertisement of the application, to avoid long-time display of the splash advertisement in the application. In addition, by presenting the splash advertisement and the thumbnail advertisement, presentation duration of the two types of advertisements is clearly increased compared with that in an existing implementation, so that a click-through rate of a user can be increased, and the economic conversion rate of the advertisement can be increased. In addition, in this application, the display of the thumbnail advertisement is added, so that a presentation time of the advertisement is increased without affecting browsing and operation of a software application by the user. Therefore, when the user is interested in the advertisement, the user may tap the thumbnail advertisement to view a detail page of the advertisement, so that the user no longer needs to perform complex steps to view the advertisement or fails to find a link of the advertisement, thereby effectively improving convenience of viewing the advertisement and further increasing the economic conversion rate of the advertisement.

Further, in this application, full-screen display duration of the splash advertisement is reduced, to improve start time efficiency of the application, and user experience can be improved. In addition, the electronic device may dynamically change a display effect of the splash advertisement to a display effect of the thumbnail advertisement, to improve the fun and flexibility of advertisement presentation, so that users can be effectively attracted, thereby further increasing a click-through rate and a conversion rate of the advertisement. In addition, in this application, in a manner of generating the thumbnail advertisement by using an AI algorithm, each time the user opens the application, the user may see advertisement content and advertisement forms that are different and are close to the preference of the user, thereby improving the fun and flexibility of advertisement presentation, and improving user experience.

It should be noted that, in the foregoing implementations of this application, for specific implementations and implementation processes of technologies such as a split-screen display technology, processing logic of a splash advertisement, a floating window, a pop-up window, an animation effect, or web page jumping, refer to related content in the conventional technology corresponding to the technologies. This is not specifically limited in this application.

In addition, in an implementation, the electronic device may implement a setting function of enabling or disabling the splash advertisement or the thumbnail advertisement. For example, the user may perform corresponding setting by using a "settings" application on the electronic device or a "settings" function of the first application. For example, the user may tap a "settings" icon on the electronic device, then tap an "application" icon, then tap an "application management" icon, select a single application or all applications on an "application management" screen, and set an option of "whether to enable floating window display" from a default "enabled" state to a "disabled" state. In this way, for some users who dislike display of the floating window or the advertisement, a floating window display operation may be closed by using the foregoing corresponding operations, thereby improving user experience.

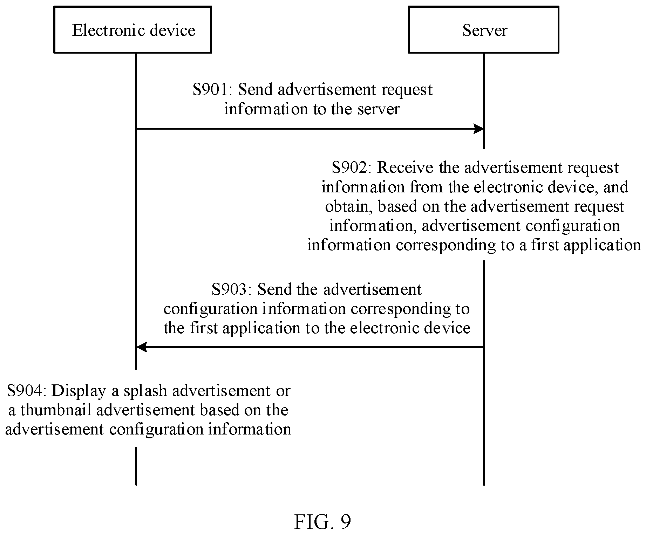

In an implementation, in a process of displaying the advertisement in the foregoing implementation, the electronic device may perform data exchange with the server to obtain information about the splash advertisement or the display duration of the splash advertisement, or obtain the display duration of the thumbnail advertisement from the server, or obtain information about a corresponding thumbnail advertisement through calculation by the server based on the AI model. Therefore, embodiments of this application further provide an advertisement display method. As shown in FIG. 9, the method may include the following steps.

S901: An electronic device sends advertisement request information to a server.

After step S401, that is, after the electronic device receives the operation of opening the first application by the user, the electronic device may request advertisement configuration information corresponding to the first application from the server. Alternatively, S901 may be performed before step S401. For example, the electronic device sends the advertisement request information to the server in a process of downloading the first application for the first time or when the first application is started for the first time.

The advertisement request information is used to request the advertisement configuration information of the first application from the server.

The advertisement request information may include an identifier of the first application, which is used to uniquely identify the application. The advertisement request information may further include a data attribute of the requested advertisement configuration information.

The data attribute of the advertisement configuration information may include at least one of the following: data such as a picture or a text of the splash advertisement displayed in the foregoing embodiment, the display duration (first duration) of the splash advertisement, data such as a picture or a text of the thumbnail advertisement, the display duration (second duration) of the thumbnail advertisement, and the URI corresponding to the splash advertisement or the thumbnail advertisement.

S902: The server receives the advertisement request information from the electronic device, and obtains, based on the advertisement request information, the advertisement configuration information corresponding to the first application.

The server may obtain, based on the identifier of the first application included in the advertisement request information by querying a database on the server, the advertisement configuration information corresponding to the first application.

In an implementation, the server may further obtain, based on the data attribute of the advertisement configuration information included in the advertisement request information by querying the database on the server, the advertisement configuration information corresponding to the data attribute of the first application.

For example, the advertisement request information includes the identifier of the first application, and the data attribute of the requested advertisement configuration information is picture data and display duration of the splash advertisement. In this case, the server may query the database to obtain that the first application corresponds to picture data of a first splash advertisement and display duration of the first splash advertisement is the first duration.

S903: The server sends the advertisement configuration information corresponding to the first application to the electronic device.

In this way, the electronic device may display the splash advertisement and/or the thumbnail advertisement based on the advertisement configuration information sent by the server. For example, based on the picture data of the first splash advertisement corresponding to the first application and that the display duration of the first splash advertisement is the first duration, when the first application is started, the electronic device first displays the first splash advertisement of the first duration, and after the first splash advertisement expires, displays a home page of the first application.

S904: The electronic device displays the splash advertisement or the thumbnail advertisement based on the advertisement configuration information.

As described in steps S402 to S404 in the foregoing embodiment, the electronic device displays the splash advertisement or the thumbnail advertisement based on the advertisement configuration information corresponding to the first application, and performs corresponding response processing based on a received user operation.

In the foregoing implementation of this application, the electronic device may present, based on a configuration delivered by the server, an advertisement by performing data exchange with the server or by enabling configuration information of the splash advertisement or the thumbnail advertisement corresponding to an application. Flexibility and variability of application-based advertisement display can be effectively improved, and user experience can be improved. In addition, the electronic device may request to obtain the configuration information of the splash advertisement or the thumbnail advertisement by exchanging real-time data with the server, and the electronic device does not need to store or pre-load configuration information of a large quantity of splash advertisements or thumbnail advertisements, or does not need to pre-store an AI model used to generate thumbnail advertisements, thereby reducing space occupation of the electronic device and improving space utilization of the electronic device.

In addition, this application further provides an electronic device, where the electronic device includes a memory and one or more processors; the memory is coupled to the processor; and the memory is configured to store computer program code, and the computer program code includes computer instructions. For details, refer to FIG. 2. When the processor executes the computer instructions, the electronic device may perform the following operations:
displaying a splash advertisement based on first duration in response to an operation of opening a first application by a user, where the first duration indicates display duration of the splash advertisement; displaying a home page of the first application after the display of the splash advertisement expires; and displaying a thumbnail advertisement at a preset location on the home page, where the thumbnail advertisement is a non-full-screen display advertisement corresponding to the splash advertisement.

In a possible design manner, the electronic device further performs the following step: ending the display of the thumbnail advertisement after displaying for second duration, or before the display of the thumbnail advertisement expires, receiving an operation of opening the thumbnail advertisement, and displaying an advertisement page corresponding to the thumbnail advertisement.

In a possible design manner, the first duration is preconfigured by the electronic device, or the first duration is obtained by the electronic device through information exchange with a server in response to the operation of opening the first application by the user.

In a possible design manner, a setting range of the first duration is 1 second to 2 seconds.

In a possible design manner, the preset location is at least one of a corner location, a blank area, and an edge area corresponding to the home page of the first application.

In a possible design manner, the second duration or the preset location is preconfigured by the electronic device, or the second duration or the preset location is obtained by the electronic device through information exchange with the server in response to the operation of opening the first application by the user

In a possible design manner, the second duration is greater than or equal to 3 seconds.

In a possible design manner, the thumbnail advertisement is displayed in a form of a floating window or a pop-up window.

In a possible design manner, when displaying the thumbnail advertisement at the preset location on the home page, the electronic device performs the following step: displaying the thumbnail advertisement in an animation form at the preset location on the home page.

In a possible design manner, the thumbnail advertisement is generated based on a preset advertisement thumbnail or key advertisement statement corresponding to the splash advertisement.

In a possible design manner, the thumbnail advertisement is generated by extracting a core element of the splash advertisement by using an artificial intelligence AI model.

In specific implementation, the processor may invoke computer program instructions stored in the memory, so that the electronic device performs the method in the foregoing method embodiments.

In an example embodiment, a computer-readable storage medium including instructions is further provided, and the instructions may be executed by a processor of an electronic device to complete the advertisement display method in the foregoing embodiment. Therefore, for technical effects that can be achieved by the computer-readable storage medium, refer to the foregoing method embodiments. Details are not described herein again.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses.

A person skilled in the art can easily figure out another implementation solution of this application after considering this specification and practicing the invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application.

In conclusion, the foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. An advertisement display method, applied to an electronic device configured with a display, wherein the method comprises:
displaying a splash advertisement based on first duration in response to an operation of opening a first application by a user, wherein the first duration indicates display duration of the splash advertisement;
displaying a home page of the first application after the display of the splash advertisement expires; and
displaying a thumbnail advertisement at a preset location on the home page, wherein the thumbnail advertisement is a non-full-screen display advertisement corresponding to the splash advertisement.

2. The method according to claim 1, wherein the method further comprises:
ending the display of the thumbnail advertisement after displaying for second duration, or before the display of the thumbnail advertisement expires, receiving an operation of opening the thumbnail advertisement, and displaying an advertisement page corresponding to the thumbnail advertisement.

3. The method according to claim 1 or 2, wherein the first duration is preconfigured by the electronic device, or the first duration is obtained by the electronic device through information exchange with a server in response to the operation of opening the first application by the user.

4. The method according to any one of claims 1 to 3, wherein a setting range of the first duration is 1 second to 2 seconds.

5. The method according to any one of claims 1 to 4, wherein the preset location is at least one of a corner location, a blank area, and an edge area corresponding to the home page of the first application.

6. The method according to any one of claims 1 to 5, wherein the second duration or the preset location is preconfigured, or the second duration or the preset location is obtained by the electronic device through information exchange with the server in response to the operation of opening the first application by the user

7. The method according to claim 6, wherein the second duration is greater than or equal to 3 seconds.

8. The method according to any one of claims 1 to 7, wherein the thumbnail advertisement is displayed in a form of a floating window or a pop-up window.

9. The method according to any one of claims 1 to 8, wherein the displaying a thumbnail advertisement at a preset location on the home page specifically comprises:
displaying the thumbnail advertisement in an animation form at the preset location on the home page.

10. The method according to any one of claims 1 to 9, wherein the thumbnail advertisement is generated based on a preset advertisement thumbnail or key advertisement statement corresponding to the splash advertisement.

11. The method according to any one of claims 1 to 9, wherein the thumbnail advertisement is generated by extracting a core element of the splash advertisement by using an artificial intelligence AI model.

12. An electronic device, wherein the electronic device comprises a memory and one or more processors; the memory is coupled to the processor; and the memory is configured to store computer program code, the computer program code comprises computer instructions, and when the processor executes the computer instructions, the electronic device performs the following operations:
displaying a splash advertisement based on first duration in response to an operation of opening a first application by a user, wherein the first duration indicates display duration of the splash advertisement;
displaying a home page of the first application after the display of the splash advertisement expires; and
displaying a thumbnail advertisement at a preset location on the home page, wherein the thumbnail advertisement is a non-full-screen display advertisement corresponding to the splash advertisement.

13. The electronic device according to claim 12, wherein the electronic device further performs the following step:
ending the display of the thumbnail advertisement after displaying for second duration, or before the display of the thumbnail advertisement expires, receiving an operation of opening the thumbnail advertisement, and displaying an advertisement page corresponding to the thumbnail advertisement.

14. The electronic device according to claim 12 or 13, wherein the first duration is preconfigured by the electronic device, or the first duration is obtained by the electronic device through information exchange with a server in response to the operation of opening the first application by the user

15. The electronic device according to any one of claims 12 to 14, wherein a setting range of the first duration is 1 second to 2 seconds.

16. The electronic device according to any one of claims 12 to 15, wherein the preset location is at least one of a corner location, a blank area, and an edge area corresponding to the home page of the first application.

17. The electronic device according to any one of claims 12 to 16, wherein the second duration or the preset location is preconfigured by the electronic device, or the second duration or the preset location is obtained by the electronic device through information exchange with the server in response to the operation of opening the first application by the user.

18. The electronic device according to claim 17, wherein the second duration is greater than or equal to 3 seconds.

19. The electronic device according to any one of claims 12 to 18, wherein the thumbnail advertisement is displayed in a form of a floating window or a pop-up window.

20. The electronic device according to any one of claims 12 to 19, wherein when displaying the thumbnail advertisement at the preset location on the home page, the electronic device performs the following step:
displaying the thumbnail advertisement in an animation form at the preset location on the home page.

21. The electronic device according to any one of claims 12 to 20, wherein the thumbnail advertisement is generated based on a preset advertisement thumbnail or key advertisement statement corresponding to the splash advertisement.

22. The electronic device according to any one of claims 12 to 20, wherein the thumbnail advertisement is generated by extracting a core element of the splash advertisement by using an artificial intelligence AI model.

23. A chip system, wherein the chip system is applied to an electronic device; the chip system comprises one or more interface circuits and one or more processors; the interface circuit is interconnected with the processor by using a line; the interface circuit is configured to receive a signal from a memory of the electronic device, and send the signal to the processor, wherein the signal comprises computer instructions stored in the memory; and when the processor executes the computer instructions, the electronic device performs the advertisement display method according to any one of claims 1 to 11.

24. A computer-readable storage medium, wherein the readable storage medium stores instructions, and when the readable storage medium runs on an electronic device, the electronic device is enabled to perform the advertisement display method according to any one of claims 1 to 11.

25. A computer program product, wherein when the computer program product runs on a computer, the computer is enabled to perform the advertisement display method according to any one of claims 1 to 11.
